# EUROPEAN PATENT APPLICATION

(11) **EP 4 597 408 A1**
(43) Date of publication of application: **06.08.2025**
(21) Application number: 23871616.1
(22) Date of filing: 25.08.2023
(51) Int. Cl.: G06Q 50/10

(54) **ASSESSMENT SYSTEM**

(30) Priority: 27.09.2022 JP 2022153715
(71) Applicant: Nikkiso Co., Ltd., Tokyo 150-6022 (JP)
(72) Inventor: ONDA, Shinya, Tokyo 150-6022 (JP); SUGIYAMA, Hironobu, Tokyo 150-6022 (JP); KOBAYASHI, Toshikazu, Tokyo 150-6022 (JP); FUJIMOTO, Shouichi, Miyazaki-shi, Miyazaki 889-1692 (JP); INAGAKI, Hiroko, Miyazaki-shi, Miyazaki 889-1692 (JP)
(74) Representative: Grosse Schumacher Knauer von Hirschhausen
(86) International application number: PCT/JP2023/030717
(87) International publication number: WO 2024/070375

(57) **Abstract**

An assessment system 1 comprises: a questionnaire generation unit 21 that generates a questionnaire for assessing a plurality of assessment items; a questionnaire result analysis unit 23 that analyzes answers to the questionnaire and determines scores of the assessment items; and an analysis result display control unit 24 that displays the analysis results on a display 4. The analysis result display control unit 24 is configured to display the analysis results using a Venn diagram 8 in which areas respectively indicating the assessment items overlap with each other, and an assessment mark 84 which is displayed in the Venn diagram 8. The analysis result display control unit 24 sets the display position of the assessment mark 84 to a position that is within the area of an assessment item having the highest or lowest score, and that, for a higher minimum score among all assessment items, is further away from an overlap center O at which all areas of the Venn diagram 8 overlap.

## Description

### TECHNICAL FIELD

The present invention relates to an assessment system.

### BACKGROUND OF THE INVENTION

In recent years, there is a demand to assess and improve infection control measures in stores, public facilities, etc. as measures against infection with new viruses (coronaviruses, etc.), and there is a demand for an assessment system to assess and analyze infection control measures. Such an assessment system could be a system that conducts a questionnaire survey of managers or employees, etc. of stores, etc., and evaluates predetermined assessment items such as closed spaces, crowded places and close-contact settings, based on answers to the questionnaire.

Prior art document information related to the invention of the present application includes, e.g., Patent Literature 1.

### CITATION LIST

### PATENT LITERATURES

Patent Literature 1: JP 2022-030242A

### SUMMARY OF THE INVENTION

The assessment system described above is required to not only present the evaluation results to questionnaire respondents in a more easily understandable manner, but also to clearly show what needs to be improved.

Therefore, it is an object of the invention to provide an assessment system that can present evaluation results and areas for improvement in a more easily understandable manner.

An assessment system in an embodiment of the invention comprises:
a questionnaire generation unit that generates a questionnaire to evaluate a plurality of assessment items;
a questionnaire display control unit that displays the questionnaire generated by the questionnaire generation unit on a display device;
an input device to enter answers to the questionnaire;
a questionnaire result analysis unit that analyzes the answers to the questionnaire entered through the input device and determines scores of the assessment items; and an analysis result display control unit that displays an analysis result of the questionnaire result analysis unit on the display device,
wherein the analysis result display control unit is configured to display the analysis result using a Venn diagram, in which areas respectively representing assessment items are shown overlapping each other, and an evaluation mark shown in the Venn diagram, and wherein the analysis result display control unit sets a display position of the evaluation mark at a position in the area for the assessment item with the lowest or highest score in such a manner that the higher the value of the lowest of scores of all the assessment
items, the farther from an overlapping center where all the areas in the Venn diagram overlap.

### Advantageous Effects of the Invention

According to the invention, it is possible to provide an assessment system that can present evaluation results and areas for improvement in a more easily understandable manner.

### BRIEF DESCRIPTION OF DRAWINGS

Fig. 1 is a schematic configuration diagram illustrating an assessment system in an embodiment of the present invention.
Fig. 2 is a diagram illustrating an example of a questionnaire database.
Fig. 3A is a diagram illustrating an example of a questionnaire display screen.
Fig. 3B is a diagram illustrating an example of the questionnaire display screen.
Fig. 4 is a diagram illustrating an example of an assessment table.
Fig. 5 is a diagram illustrating an example of an analysis result display screen.
Fig. 6 is an explanatory diagram illustrating an example of display positions of an evaluation mark in a Venn diagram.
Fig. 7 is a flowchart showing a control flow of the assessment system.
Fig. 8 is a flowchart showing of an analysis result display processing.

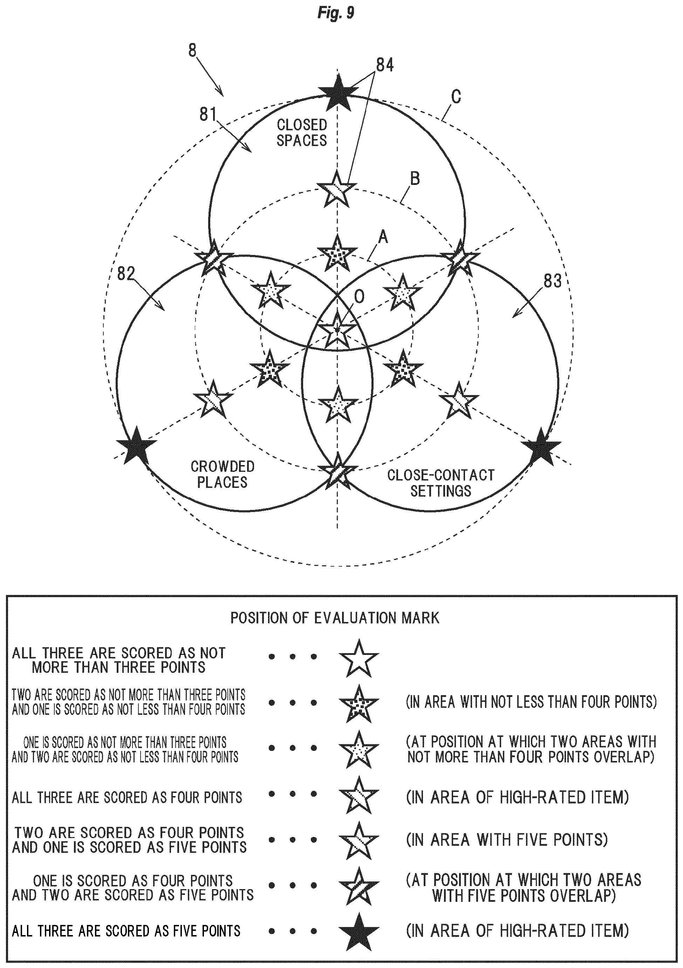

Fig. 9 is an explanatory diagram illustrating a modification of the display positions of the evaluation mark in the Venn diagram.

### DETAILED DESCRIPTION OF THE INVENTION

### Embodiment

An embodiment of the invention will be described below in conjunction with the appended drawings.

### General configuration of Assessment system 1

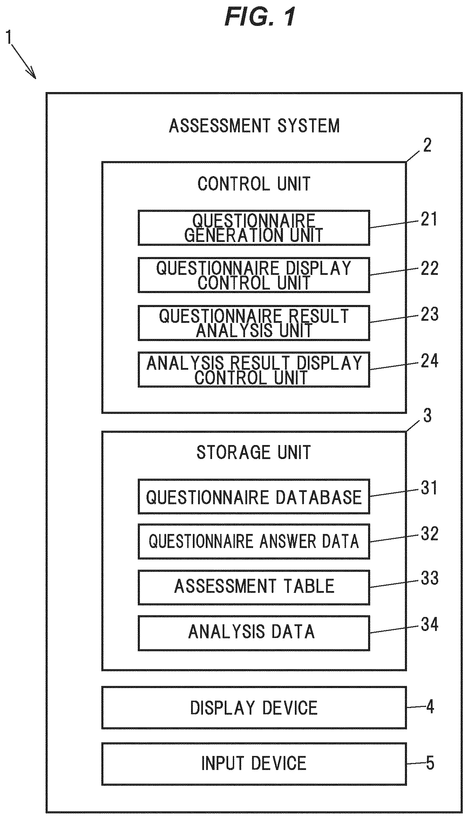

Fig. 1 is a schematic configuration diagram illustrating an assessment system 1 in the present embodiment. The assessment system 1 is a system to assess infection control measures in, e.g., stores, public facilities, etc., and evaluate predetermined assessment items based on the result of answers of respondents to a questionnaire.

As shown in Fig. 1, the assessment system 1 includes a control unit 2, a storage unit 3, a display device 4, and an input device 5. The assessment system 1 is composed of a portable terminal device such as a smartphone, tablet, or laptop computer. The functions of each unit in the control unit 2 and the storage unit 3 may be provided in a server, etc., and this server and the terminal device such as a smartphone may be configured to communicate with each other. In other words, at least the display device 4 and the input device 5 should be composed of a portable terminal device. This allows a respondent to easily answer the questionnaire whenever, e.g., they have some spare time, making it easy to continue using the assessment system 1. However, the assessment system 1 does not need to be a portable terminal device, and may be composed of, e.g., a stationary personal computer.

The control unit 2 is realized by appropriately combining an arithmetic element such as CPU, a memory, interface, software, and a storage device, etc. In the present embodiment, the control unit 2 has a questionnaire generation unit 21, a questionnaire display control unit 22, a questionnaire result analysis unit 23, and an analysis result display control unit 24. Each unit will be described in detail later.

The storage unit 3 is realized by a predetermined storage region of a memory or a storage device. The display device 4 is to display the questionnaire and evaluation result, and is composed of, e.g., a display device such as a liquid crystal display. The input device 5 is a device to input answers to the questionnaire. When the assessment system 1 is a smartphone or tablet, the display device 4 may be composed of a touch panel display so that the display device 4 also serves as the input device 5. Meanwhile, when the assessment system 1 is a laptop computer, the input device 5 may be, e.g., a keyboard, mouse, or trackpad, etc.

### Assessment items

**In** the present embodiment, infection control measures are assessed. Therefore, three assessment items, "closed spaces", "crowded places" and "close-contact settings" (so-called three Cs), are evaluated in this example. The object to be assessed is not limited to the infection control measures, and the assessment items can be set as appropriate. **In** this regard, however, as will be described in detail later, since the evaluation result is shown using a Venn diagram in the present embodiment, it is necessary to have plural assessment items and it is more preferable to have two or three assessment items.

### Control unit 2

### Questionnaire generation unit 21

The questionnaire generation unit 21 performs questionnaire generation processing to generate a questionnaire to evaluate predetermined assessment items. **In** the questionnaire generation processing, a questionnaire is generated based on a questionnaire database 31 stored in advance in the storage unit 3. **In** the questionnaire database 31 of the present embodiment, plural questions are set for one assessment item and each question has plural variations. The questionnaire generation unit 21 is configured to generates the questionnaire by randomly extracting and selecting each question from the plural variations based on the questionnaire database 31.

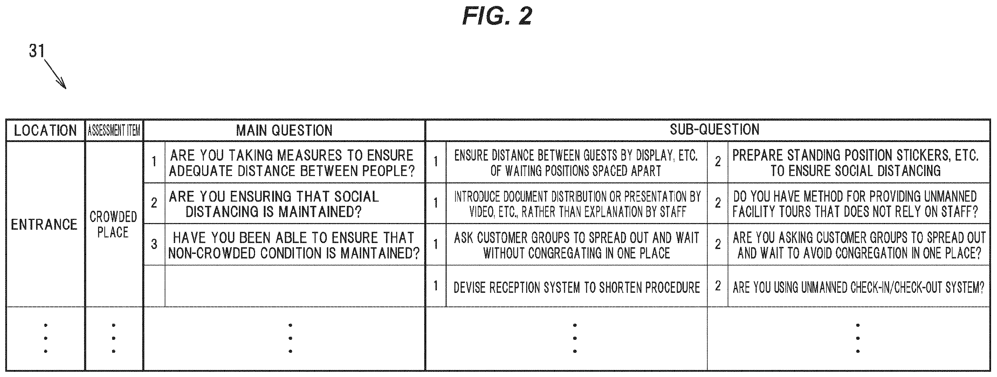

Fig. 2 is a diagram illustrating an example of the questionnaire database 31. In Fig. 2, the questionnaire database 31 targeted at accommodation facilities such as hotels is shown as an example. As shown in Fig. 2, in the questionnaire database 31, questions about three assessment items (i.e., "closed spaces", "crowded places" and "close-contact settings") are set for each location to be assessed. In the example shown in the drawing, main questions (or headings) and corresponding sub-questions (or check items) are set. In addition, in the example shown in the drawing, the main question has three variations and each sub-question has two variations. However, the numbers of variations are not limited to those in the example shown in the drawing and can be set as appropriate. The questionnaire generation unit 21 generates the questionnaire by repeatedly randomly selecting which variation to use for each main question and each sub-question, e.g., by using a random number table (i.e., using a function of generating random numbers). It is thereby possible to avoid the situation where respondents need to repeatedly answer exactly the same questions each time the questionnaire is conducted, resulting in that getting bored with the same routine can be suppressed.

The questionnaire generation unit 21 may randomly determine the order of the questions. For example, it may be determined so that the main questions are always in the same order and the sub-questions are in a random order. Obviously, the order of the main questions may also be in a random order. As a result, getting bored with the same routine as described above can be further suppressed.

Although the details will be described later, each assessment item is evaluated on a scale from 1 to 5 (i.e., marked out of 5 points) in the present embodiment. Therefore, the questionnaire generation unit 21 is preferably configured to set at least not less than five questions (or sub-questions) for each assessment item. In the present embodiment, since accommodation facilities such as hotels are to be assessed and include plural locations to be assessed, the questionnaire generation unit 21 is configured to set five questions for each of the assessment items ("closed spaces", "crowded places" and "close-contact settings" in this example) for each location.

In addition, in the present embodiment, the questionnaire generation unit 21 is configured to generate a questionnaire that includes a question asking to indicate a low-rated item that is an item rated (subjectively evaluated) lowest by a respondent among the assessment items ("closed spaces", "crowded places" and "close-contact settings" in this example). This is because the low-rated item, which is an answer to this question, is used to display the evaluation result using a Venn diagram (described later). This point will be described in detail later.

### Questionnaire display control unit 22

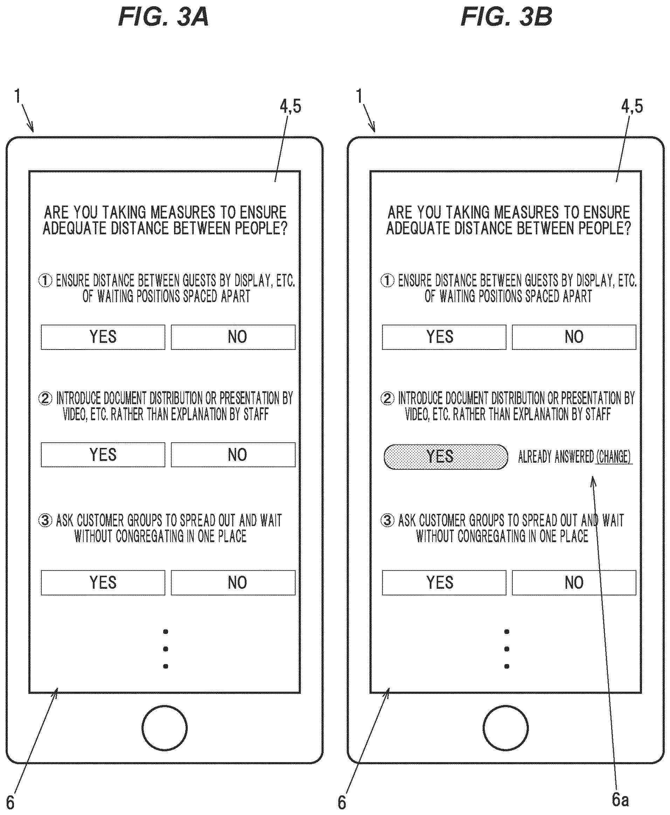

The questionnaire display control unit 22 performs questionnaire display processing to display the questionnaire generated by the questionnaire generation unit 21 on the display device 4. For example, when variation number 1 is selected for all the main question and sub-questions in Fig. 2, a questionnaire display screen 6 is as shown in Fig. 3A. The respondent enters answers to the questionnaire using the input device 5 (a touch panel display in the example shown in the drawing) while looking at such a questionnaire display screen 6. The entered answers to the questionnaire are stored as questionnaire answer data 32 in the storage unit 3.

The questionnaire display control unit 22 may be configured to display the questionnaire with an answer already entered for a question that has already been answered, based on the questionnaire answer data 32. For example, as shown in Fig. 3B, when the second sub-question has already been answered, the questionnaire display screen 6 may be displayed with the answer stored in the questionnaire answer data 32 already entered as the answer to this question. In this regard, since the answers may change, it is desirable to, e.g., configure to be able to change the answer by displaying a change button 6a that allows the answer to be changed. This makes it possible to save time and effort to enter answers to questions that have already been answered, thereby saving respondent's time and effort and further reducing the time required to enter the questionnaire (i.e., the time spending on entering the questionnaire).

The questionnaire display control unit 22 can be configured so that questions which have already been answered are not displayed at all. However, even if the questions have already been answered, the answers may change when the respondent changes or when a long time has passed since the last questionnaire, hence, it is desirable to take some measures, such as configuring the system so that, e.g., the respondent is entered when starting the questionnaire and questions are not omitted when the respondent has changed since the last time.

### Questionnaire result analysis unit 23

The questionnaire result analysis unit 23 performs questionnaire result analysis processing to analyze the answers to the questionnaire entered through the input device 5 and determine the score of each assessment item. In the present embodiment, each assessment item is evaluated on a five-point scale. The score of each assessment item is determined for each location, in such a manner that, e.g., an entrance is given 4 points for "closed spaces", 4 points for "crowded places" and 4 points for "close-contact settings".

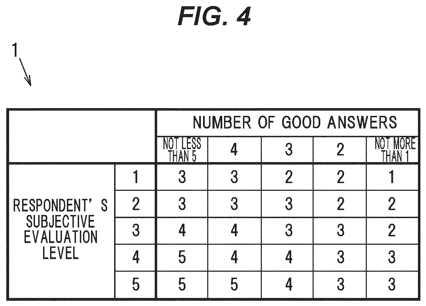

In the present embodiment, the questionnaire result analysis unit 23 determines the score of each assessment item by taking into consideration the respondent's subjective evaluation. In more particular, the questionnaire generation unit 21 generates a questionnaire that includes questions asking a respondent to give a subjective evaluation level for each assessment item, and the questionnaire result analysis unit 23 determines, for each of the assessment items, a score of the assessment item based on an answer to the questionnaire about the assessment item and the evaluation level for the assessment item. In this example, the respondents are asked to enter the subjective evaluation level on a five-point scale in the questionnaire, and a score of each assessment item is determined using an assessment table 33 as shown in Fig. 4, based on the entered evaluation level and the number of good answers to the five questionnaire questions (i.e., the number of answers judged to be good for each assessment item). For example, when a respondent's subjective evaluation level for "closed spaces" at the entrance is 3 and the number of good answers in the questionnaire is 4, the score of this assessment item is 4 points according to the assessment table 33 in Fig. 4. In this regard, the assessment table 33 is preferably set and stored in advance in the storage unit 3. The score of each assessment item for each location obtained by the questionnaire result analysis unit 23 is stored as analysis data 34 in the storage unit 3.

### Analysis result display control unit 24

The analysis result display control unit 24 performs analysis result display processing to display the analysis result of the questionnaire result analysis unit 23 on the display device 4. In the present embodiment, the analysis result display control unit 24 displays individual evaluation (i.e., analysis result) of each location using a radar chart, and displays the overall evaluation (i.e., analysis result) using a Venn diagram.

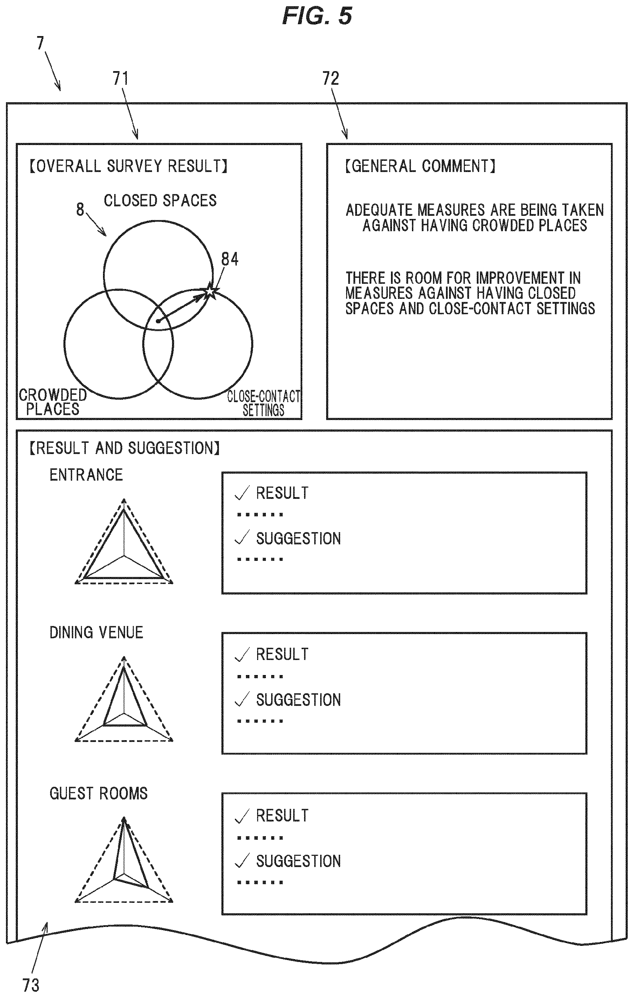

Fig. 5 is a diagram illustrating an example of an analysis result display screen 7. The analysis result display screen 7 shown in Fig. 5 is merely an example, and its layout and display items, etc. are not limited to those in the example shown in the drawing. As shown in Fig. 5, the analysis result display screen 7 is generally divided into three areas: an overall survey result area 71, a general comment area 72, and a result-and-suggestion area 73. The overall survey result area 71 is an area showing the analysis result (i.e., the evaluation result) of the facility as a whole, taking into account the evaluation of each location. In this example, the average of the scores at all locations for each assessment item is used as the score of each assessment item for the entire facility. The display in the overall survey result area 71 will be described in detail later.

The general comment area 72 is an area showing a general comment based on the score of each assessment item for the entire facility. The method for displaying the contents of the general comment is not particularly limited, and the configuration can be such that, e.g., the contents of the general comment to the score of each assessment item for the entire facility are compiled into a database and stored in advance in the storage unit 3, and based on this database, the control unit 2 extracts the contents of the general comment corresponding to the score of each assessment item for the entire facility and display the contents in the general comment area 72.

The result-and-suggestion area 73 is an area showing the score and comment for each assessment item for each location to be assessed (e.g., the entrance, dining venue, customer seating, backyard, etc.). In the result-and-suggestion area 73 of the present embodiment, the score of each assessment item for each location is displayed using a radar chart. The comments in the result-and-suggestion area 73 can be displayed, e.g., in a similar manner to the general comment described above.

### Details of Display in Overall survey result area 71

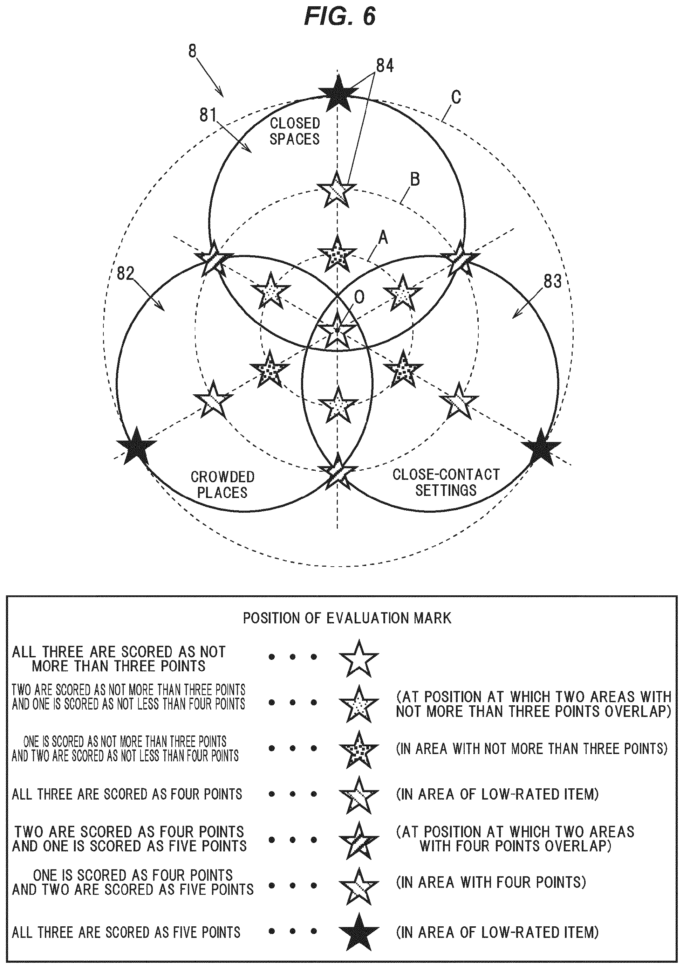

Fig. 6 is an explanatory diagram illustrating display positions of an evaluation mark 84 in a Venn diagram 8 displayed in the overall survey result area 71. As shown in Fig. 6, in the present embodiment, the analysis result for the entire facility is displayed using the Venn diagram 8, in which areas 81 to 83 respectively representing the assessment items are shown overlapping each other, and also using the evaluation mark 84 shown in the Venn diagram 8. The areas 81 to 83 respectively representing the assessment items are each shown by a circle having the same diameter, and are respectively arranged at positions that are 120-degree rotationally symmetric about an overlapping center O. The overlapping center O is the position where all the areas 81 to 83 overlap each other, and is the position of the axis of symmetry about which the areas 81 to 83 are rotationally symmetric. With the Venn diagram 8, plural assessment items are required. However, in case of the Venn diagram 8, if there are too many assessment items, it is difficult to display so that all the areas overlap each other. Therefore, even though the number of assessment items can be, e.g., not less than four, two or three is more desirable. Fig. 6 shows the case where there are three assessment items, "closed spaces", "crowded places" and "close-contact settings". Hereinafter, an area representing "closed spaces" in the Venn diagram 8 will be referred to as a Closed Spaces area 81, an area representing "crowded places" as a Crowded Places area 82, and an area representing "close-contact settings" as a Close-Contact Settings area 83.

In the present embodiment, the positions of the evaluation mark 84 displayed on the Venn diagram 8 allows to understand assessment items desired to be improved. The position of the evaluation mark 84 is determined by the score of each assessment item. The average of the respective locations for the same assessment item can be used as the score of the assessment item for the entire facility.

In the present embodiment, the analysis result display control unit 24 sets the display position of the evaluation mark 84 at a position in the area for the assessment item with the lowest score in such a manner that the higher the value of the lowest of scores of all the assessment items, the farther from the overlapping center O in the Venn diagram 8. This allows the position of the evaluation mark 84 to indicate the assessment item which should be improved, making it easier to see what needs to be improved. Furthermore, the comprehensive evaluation of the assessment items can be checked at a glance based on how far the position of the evaluation mark 84 is from the overlapping center O.

In addition, when the scores of all the assessment items are the same, the analysis result display control unit 24 displays the evaluation mark 84 in the area of the low-rated item (i.e., an item subjectively rated low by the respondent) entered in the questionnaire. It is considered that items subjectively rated low by the respondent are often desired to be improved because of factors that cannot be assessed through a questionnaire alone. Therefore, by displaying the evaluation mark 84 on the low-rated item subjectively rated low by the respondent and clearly showing what needs to be improved, it is possible to encourage to take more infection control measures, etc.

In more particular, virtual circles A to C centered at the overlapping center O are set, as shown in the upper part of Fig. 6. The circle A has the smallest diameter, the circle C has the largest diameter and is a circumscribed circle in the Venn diagram 8, and the circle B has a diameter between those of the circles A and C. **In** the present embodiment, the evaluation mark 84 is displayed on the circle A or on the overlapping center O when the lowest score among the three assessment items is not more than three points, displayed on the circle B when the lowest score is four points, and displayed on the circle C when the lowest score is five points.

In particular, as shown in the lower part of Fig. 6, when all the three assessment items are scored as not more than three points, the evaluation mark 84 is displayed at a position overlapping the overlapping center O. When two of the three assessment items are scored as not more than three points and one is scored as not less than four points, the evaluation mark 84 is displayed at a position which is on the circle A shown in the figure and at which the two areas with scores of not more than three points overlap. For example, when Closed Spaces and Close-Contact Settings are scored as three points and Crowded Places is scored as four points, the evaluation mark 84 is displayed at a position on the circle A at which the Closed Spaces area 81 and the Close-Contact Settings area 83 overlap. When one of the three assessment items is scored as not more than three points and two are scored as not less than four points, the evaluation mark 84 is displayed on the circle A in the drawing in a central portion of the area with the score of not more than three points. For example, when Closed Spaces and Close-Contact Settings are scored as four points and Crowded Places is scored as three points, the evaluation mark 84 is displayed on the circle A in a central portion of the Crowded Places area 82 (i.e., at the center of an arc that is a part of the circle A and overlaps the Crowded Places area 82).

When all the three assessment items are scored as four points, the evaluation mark 84 is displayed on the circle B in a central portion of a low-rated item entered in the questionnaire (i.e., at the center of an arc that is a part of the circle B and overlaps the low-rated item). When two of the three assessment items are scored as four points and one is scored as five points, the evaluation mark 84 is displayed at a position which is on the circle B shown in the figure and at which the two areas with scores of four points overlap. When one of the three assessment items is scored as four points and two are scored as five points, the evaluation mark 84 is displayed on the circle B shown in the figure in a central portion of the area with the score of four points. When all the three assessment items are scored as five points, the evaluation mark 84 is displayed on the circle C in a central portion of the low-rated item entered in the questionnaire (in the example shown in the drawing, at a point where the area of the low-rated item intersects the circle C).

### Control flow

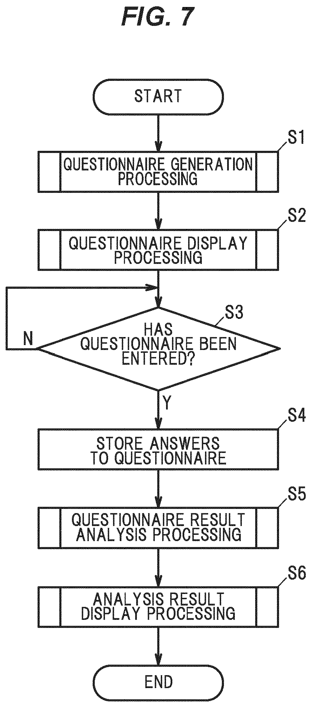

Fig. 7 is a flowchart showing a control flow of the assessment system 1. When conducting an assessment of infection control measures, etc. using the assessment system 1, the questionnaire generation processing is first performed in Step S1, as shown in Fig. 7. In the questionnaire generation processing, a questionnaire is generated based on the questionnaire database 31 stored in advance in the storage unit 3. At this time, it is desirable that the questionnaire generation unit 21 generate the questionnaire by randomly extracting questions from the variations set in the questionnaire database 31 and further randomly rearranging the order of the questions. In addition, in the questionnaire generation processing, the questionnaire is generated so as to include a question asking to indicate which is a low-rated item for each location and a question asking a respondent to give a subjective evaluation level for each location and each assessment item.

After that, in Step S2, questionnaire display processing is performed to display the questionnaire generated in Step S1 on the display device 4. At this time, the questionnaire display control unit 22 may display the questionnaire with an answer already entered for a question that has already been entered. After that, in Step S3, the control unit 2 determines whether or not the questionnaire has been entered. When the determination is No (N), Step S3 is repeated. When the determination is Yes (Y), the process proceeds to Step S4.

In Step S4, the control unit 2 stores the entered answers to the questionnaire as the questionnaire answer data 32 in the storage unit 3. After that, questionnaire analysis processing is performed in Step 5. In the questionnaire analysis processing, the number of good answers and the evaluation level are counted for each location and each assessment item, and scores are determined using the assessment table 33. The determined scores of each location and each assessment item are stored as the analysis data 34 in the storage unit 3.

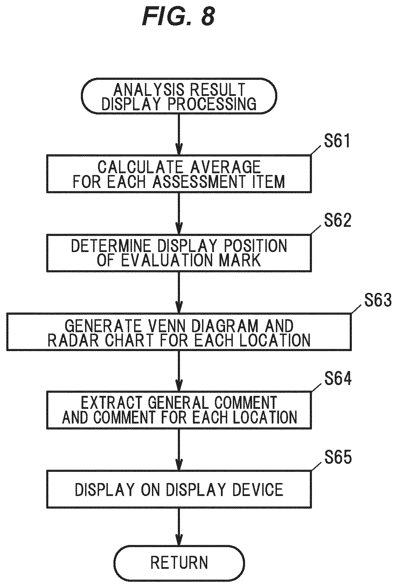

After that, analysis result display processing is performed in Step S6. In the analysis result display processing, in Step 61, the respective averages for the three assessment items, closed spaces, crowded places and close-contact settings, are first calculated based on the analysis data 34 obtained in Step S5, as shown in Fig. 8. After that, in Step S62, the position of the evaluation mark 84 to be displayed in the Venn diagram 8 is determined based on the obtained averages for the assessment items. The method for determining the position of the evaluation mark 84 is as described with reference to Fig. 6.

Then, after the Venn diagram 8 including the evaluation mark 84 and a radar chart for each location are generated in Step S63 and the general comment and the comment for each location are extracted in Step S64, each item is displayed on the display device 4 in Step S65 (see Fig. 5). The process then returns (back to Fig. 7) and ends.

### Functions and Effects of the embodiment

As described above, in the assessment system 1 of the present embodiment, the analysis result display control unit 24 is configured to display the analysis result using the evaluation mark 84 displayed in the Venn diagram 8, and the display position of the evaluation mark 84 is set at a position in the area for the assessment item with the lowest score in such a manner that the higher the value of the lowest of scores of all the assessment items, the farther from the overlapping center O. This makes it possible to judge areas for improvement and overall evaluation at a glance, realizing the assessment system 1 that presents the evaluation result and areas for improvement in a more understandable manner.

### Modifications

In the embodiment described above, the evaluation mark 84 is displayed in the area for the assessment item with the lowest score to make clear which assessment item should be improved. However, it is not limited thereto and the evaluation mark 84 may be displayed in the area for the assessment item with the highest score in an opposite manner. In this case, the display position of the evaluation mark 84 serves as a guide for indicating the assessment item which is most successfully addressed. **In** this case, the configuration may be such that the questionnaire is generated to include a question asking to indicate a high-rated item that is an item rated highest by a respondent among the assessment items, and when the scores of all of the assessment items are the same, the evaluation mark 84 is displayed in the area for the high-rated item.

In this regard, the Venn diagram 8 may be configured to display both the evaluation mark 84 indicating the assessment item which is most successfully addressed and the evaluation mark 84 indicating the assessment item that should be improved as described in the embodiment. In this case, it is preferable that the color or shape, etc. of the two evaluation marks 84 be different so that what the two evaluation marks 84 represent can be identified.

In addition, although not mentioned in the above embodiment, the control unit 2 of the assessment system 1 may have a function of outputting a notification to prompt to enter the questionnaire. For example, it may be configured to output a notification to prompt to enter the questionnaire when a preset number of days have elapsed since the date the last questionnaire was answered. In addition, it may be configured to output a notification to prompt to enter the questionnaire when, e.g., the infectious disease alert level is raised, when the number of infected people increases for a predetermined number of consecutive days, or when an outbreak of some infectious disease occurs, etc. For example, the control unit 2 may be configured to obtain information of the infectious disease alert level or the number of infected people via the Internet, or may be configured to determine that an outbreak of some kind of infectious disease has occurred when, e.g., the number of search hits in news search with a predetermined keyword (e.g., "infectious disease", etc.) on the Internet is not less than a predetermined threshold value. **In** addition, the notification to prompt to enter the questionnaire may be realized by using a notification function of a smartphone or tablet.

Furthermore, although not mentioned in the above embodiment, to inhibit the respondent from answering without reading the questions, the control unit 2 may be configured so that the respondent cannot proceed to the next question (cannot enter the answer to the next question) if the speed to answer is fast. For example, the control unit 2 can be configured to invalidate the answer entered to the next question if the time to answer one question is not more than one second (i.e., if the time from when the answer is entered to the previous question to when the answer is entered to the next question is not more than one second). It can also be configured to display an alert on the display device 5 when the answer is made too quickly.

Furthermore, although the case where the analysis result for this time is displayed on the analysis result display screen shown in Fig. 5 has been described, the analysis results for the last time and this time may be displayed so as to allow for comparison if data of past analysis results is available.

### Summary of the embodiment

Technical ideas understood from the embodiment will be described below citing the reference signs, etc., used for the embodiment. However, each reference sign, etc., described below is not intended to limit the constituent elements in the claims to the members, etc., specifically described in the embodiment.
(1) An assessment system 1 comprising: a questionnaire generation unit 21 that generates a questionnaire to evaluate a plurality of assessment items; a questionnaire display control unit 22 that displays the questionnaire generated by the questionnaire generation unit 21 on a display device 4; an input device 5 to enter answers to the questionnaire; a questionnaire result analysis unit 23 that analyzes the answers to the questionnaire entered through the input device 5 and determines scores of the assessment items; and an analysis result display control unit 24 that displays an analysis result of the questionnaire result analysis unit 23 on the display device 4, wherein the analysis result display control unit 24 is configured to display the analysis result using a Venn diagram 8, in which areas respectively representing assessment items are shown overlapping each other, and an evaluation mark 84 shown in the Venn diagram 8, and wherein the analysis result display control unit 24 sets a display position of the evaluation mark 84 at a position in the area for the assessment item with the lowest or highest score in such a manner that the higher the value of the lowest of scores of all the assessment items, the farther from an overlapping center where all the areas in the Venn diagram 8 overlap.
(2) The assessment system 1 as defined by (1), wherein the analysis result display control unit 24 is configured to set the display position of the evaluation mark 84 in the area for the assessment item with the lowest score, wherein the questionnaire generation unit 21 is configured to generate the questionnaire so as to include a question asking to indicate a low-rated item that is an item rated lowest by a respondent among the assessment items, and wherein the analysis result display control unit 24 displays the evaluation mark 84 in an area for the low-rated item when the scores of all the assessment items are the same.
(3) The assessment system 1 as defined by (1), wherein the analysis result display control unit 24 is configured to set the display position of the evaluation mark 84 in the area for the assessment item with the highest score, wherein the questionnaire generation unit 21 is configured to generate the questionnaire so as to include a question asking for an answer to a high-rated item that is an item rated highest by a respondent among the assessment items, and wherein the analysis result display control unit 24 displays the evaluation mark 84 in an area for the high-rated item when the scores of all the assessment items are the same.
(4) The assessment system 1 as defined by (1), wherein at least the display device 4 and the input device 5 are composed of a portable terminal device.
(5) The assessment system 1 as defined by (1), comprising: a questionnaire database 31 in which a plurality of questions are set for one said assessment item and a plurality of variations are set for each of the questions, wherein the questionnaire generation unit 21 generates the questionnaire by randomly extracting and selecting each of the questions from the plurality of variations based on the questionnaire database 31.
(6) The assessment system 1 as defined by (5), wherein the questionnaire generation unit 21 randomly determines the order of the questions.
(7) The assessment system 1 as defined by (1), wherein the questionnaire generation unit 21 is configured to generate the questionnaire so as to include a question asking a respondent to give a subjective evaluation level for each of the assessment items, and wherein for each of the assessment items, the questionnaire result analysis unit 23 determines a score of the assessment item based on an answer to the questionnaire about the assessment item and the evaluation level for the assessment item.
(8) The assessment system 1 as defined by (1), comprising: a storage unit 3 that stores a result of answers to the questionnaire as questionnaire answer data 32, wherein the questionnaire display control unit 22 displays the questionnaire with an answer already entered for a question that has already been answered, based on the questionnaire answer data 32.

Although the embodiment of the invention has been described, the invention according to claims is not to be limited to the embodiment described above. Further, please note that not all combinations of the features described in the embodiments are necessary to solve the problem of the invention. In addition, the invention can be appropriately modified and implemented without departing from the gist thereof.

### REFERENCE SIGNS LIST

1: assessment system, 2: control unit, 21: questionnaire generation unit, 22: questionnaire display control unit, 23: questionnaire result analysis unit, 24: analysis result display control unit, 3: storage unit, 31: questionnaire database, 32: questionnaire answer data, 33: assessment table, 32: analysis data, 4: display device, 5: input device, 8: Venn diagram, 84: evaluation mark

## Claims

1. An assessment system, comprising:
a questionnaire generation unit that generates a questionnaire to evaluate a plurality of assessment items;
a questionnaire display control unit that displays the questionnaire generated by the questionnaire generation unit on a display device;
an input device to enter answers to the questionnaire;
a questionnaire result analysis unit that analyzes the answers to the questionnaire entered through the input device and determines scores of the assessment items; and
an analysis result display control unit that displays an analysis result of the questionnaire result analysis unit on the display device,
wherein the analysis result display control unit is configured to display the analysis result using a Venn diagram, in which areas respectively representing assessment items are shown overlapping each other, and an evaluation mark shown in the Venn diagram, and
wherein the analysis result display control unit sets a display position of the evaluation mark at a position in the area for the assessment item with the lowest or highest score in such a manner that the higher the value of the lowest of scores of all the assessment items, the farther from an overlapping center where all the areas in the Venn diagram overlap.

2. The assessment system according to claim 1, wherein the analysis result display control unit is configured to set the display position of the evaluation mark in the area for the assessment item with the lowest score, wherein the questionnaire generation unit is configured to generate the questionnaire so as to include a question asking to indicate a low-rated item that is an item rated lowest by a respondent among the assessment items, and wherein the analysis result display control unit displays the evaluation mark in an area for the low-rated item when the scores of all the assessment items are the same.

3. The assessment system according to claim **1,** wherein the analysis result display control unit is configured to set the display position of the evaluation mark in the area for the assessment item with the highest score, wherein the questionnaire generation unit is configured to generate the questionnaire so as to include a question asking to indicate a high-rated item that is an item rated highest by a respondent among the assessment items, and wherein the analysis result display control unit displays the evaluation mark in an area for the high-rated item when the scores of all the assessment items are the same.

4. The assessment system according to claim 1, wherein at least the display device and the input device are composed of a portable terminal device.

5. The assessment system according to claim 1, comprising:
a questionnaire database in which a plurality of questions are set for one said assessment item and a plurality of variations are set for each of the questions,
wherein the questionnaire generation unit generates the questionnaire by randomly extracting and selecting each of the questions from the plurality of variations based on the questionnaire database.

6. The assessment system according to claim 5, wherein the questionnaire generation unit randomly determines the order of the questions.

7. The assessment system according to claim 1, wherein the questionnaire generation unit is configured to generate the questionnaire so as to include a question asking a respondent to give a subjective evaluation level for each of the assessment items, and wherein for each of the assessment items, the questionnaire result analysis unit determines a score of the assessment item based on an answer to the questionnaire about the assessment item and the evaluation level for the assessment item.

8. The assessment system according to claim 1, comprising:
a storage unit that stores a result of answers to the questionnaire as questionnaire answer data,
wherein the questionnaire display control unit displays the questionnaire with an answer already entered for a question that has already been answered, based on the questionnaire answer data.
